# EUROPEAN PATENT APPLICATION

(11) **EP 3 085 757 A1**
(43) Date of publication of application: **26.10.2016**
(21) Application number: 15164902.7
(22) Date of filing: 23.04.2015
(51) Int. Cl.: C10M 145/32, C08G 65/20, C10M 107/34, C08L 71/02

(54) **STABILIZATION OF ALKOXYLATED POLYTETRAHYDROFURANES WITH ANTIOXIDANTS**

(71) Applicant: BASF SE, 67056 Ludwigshafen am Rhein (DE)
(72) Inventor: Weiß, Thomas, 68549 Ilvesheim (DE); Geyer, Karolin, 67061 Ludwigshafen (DE); Kashani-Shirazi, Nawid, 67157 Wachenheim (DE); Ecormier, Muriel, 68159 Mannheim (DE); Dery, Mary, Putnam Valley, 10579 (US); Goyal, Arjun, West Deptford, 08086 (US); Cusatis, Patrice, Newburgh, 12550 (US); Dykhno, Olga, New York, 10027 (US)
(74) Representative: BASF IP Association

(57) **Abstract**

The presently claimed invention is directed to the stabilization of compositions comprising alkoxylated polytetrahydrofuranes by antioxidant compounds that are selected from unsubstituted or substituted phenoxazines, unsubstituted or substituted phenothiazines, hydroquinone-type stabilizer, hindered amines and combinations thereof.

## Description

The presently claimed invention is directed to the stabilization of alkoxylated polytetrahydrofuranes using selected antioxidant compounds that are selected from unsubstituted or substituted phenoxazines, unsubstituted or substituted phenothiazines, hydroquinone-type stabilizer, hindered amines and combinations thereof.

Lubricating oil compositions are used in a variety of applications, such as industrial applications, transportation and engines. Industrial applications comprise of applications such as hydraulic oil, air compressor oil, gas compressor oil, gear oil, bearing and circulating system oil, refrigerator compressor oil and steam and gas turbine oils.

Conventional lubricating oil compositions typically comprise base stocks, co-solvents and additives. The base stock is in each case selected according to the viscosity that is desired in the envisioned application. Combinations of base stocks of different viscosities, i.e. low and high viscosity respectively, are often used to adjust the needed final viscosity. The co-solvents are used to dissolve polar additives in usually less polar or unpolar base stocks.

Polyalkylene glycols are known to have thickening properties for a wide range of liquid compositions. Therefore, polyalkylene glycols have been generally suggested for lubricating compositions (Synthetics, Mineral Oils and Bio-Based Lubricants, Chemistry and Technology, edited by Leslie R. Rudnick, CRC Taylor & Francis, chapter 6).

A special class of polyalkylene glycols encompasses the alkoxylated polytetrahydrofuranes. WO 2014/184062 A1 describes the preparation and use of alkoxylated polytetrahydrofuranes in lubricating oil compositions.

WO 2014/139935 A1 suggests stabilizing lubricant compositions against oxidative degradation by conventional antioxidants, particularly hindered phenols, alkyl aromatic sulfides or phosphorus compounds such as phosphites or phosphonic acid esters, or sulfur-phosphorus compounds.

Stabilization of propylene oxide tetrahydrofuran copolymer against oxidative degradation has been briefly studied by P.A. Okunev, Sb. Nauch. Tr. Ivanov. Energ. Inst., 1972, Volume No. 14 pages 130-142; Ref. Zh. Khim. 1973, Abstract No 15S237.

However, the attempts to stabilize alkoxylated polytetrahydrofuranes have been proven to be only insufficient and more efficient ways of stabilizing alkoxylated polytetrahydrofuranes are desirable.

Thus, it was an objective of the presently claimed invention to provide compositions with alkoxylated polytetrahydrofuranes which are highly stabilized by the presence of suitable antioxidant compounds.

There is also a constant need for improved lubricant oil compositions for use in anti-friction applications, e.g. for the modification of lubricating properties in engine oils. Compositions based on alkoxylated polytetrahydrofuranes have high potential in such lubricating applications but require high degree of additional stabilization.

Surprisingly, it has been found that compositions with alkoxylated polytetrahydrofuranes can be very efficiently stabilized by the presence of antioxidants that are selected from unsubstituted or substituted phenoxazines, unsubstituted or substituted phenothiazines, hydroquinone-type stabilizer, hindered amines and combinations thereof.

Consequently, compositions comprising alkoxylated polytetrahydrofuranes in combination with selected antioxidants have been prepared and characterized to have high resistance to degradation and excellent shear stability.

The presently claimed invention is directed to a composition comprising
(a) alkoxylated polytetrahydrofurane of general formula (II) 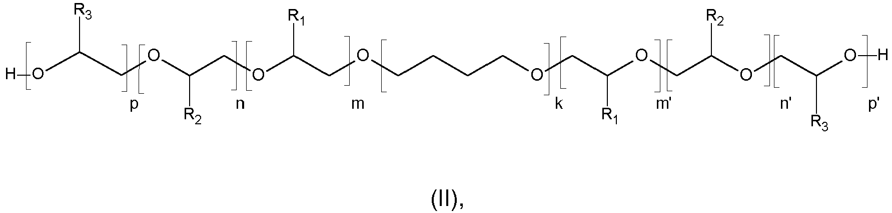 wherein
   - m: is an integer in the range of ≥ 1 to ≤ 50,
   - m': is an integer in the range of ≥ 1 to ≤ 50,
   - (m+m'): is an integer in the range of ≥ 1 to ≤ 90,
   - n: is an integer in the range of ≥ 0 to ≤ 75,
   - n': is an integer in the range of ≥ 0 to ≤ 75,
   - p: is an integer in the range of ≥ 0 to ≤ 75,
   - p': is an integer in the range of ≥ 0 to ≤ 75,
   - k: is an integer in the range of ≥ 2 to ≤ 30,
   - R¹: denotes an unsubstituted, linear or branched, alkyl radical having 6, 7, 8, 9, 10, 11, 12, 13, 14, 15, 16, 17, 18, 19, 20, 21, 22, 23, 24, 25, 26, 27 or 28 carbon atoms,
   - R²: denotes -CH₂-CH₃, and
   - R³: identical or different, denotes a hydrogen atom or -CH₃,
   whereby the concentrations denoted by k are distributed to form a block polymeric structure and the concentrations denoted by p, p', n, n', m and m' are distributed to form a block polymeric structure or a random polymeric structure, and
(b) an antioxidant selected from the group consisting of
   unsubstituted phenoxazine or phenoxazine which is substituted with 1, 2 or 3 substituents selected from the group consisting of -C₁₋₁₀-alkyl and -O-C₁₋₁₀-alkyl; unsubstituted phenothiazine or phenothiazine which is substituted with 1, 2 or 3 substituents selected from the group consisting of -C₁₋₁₀-alkyl and -O-C₁₋₁₀-alkyl; hydroquinone-type stabilizers of general formula (III), 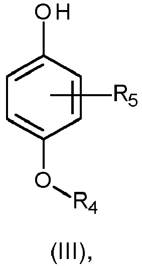 wherein
   - R⁴: denotes hydrogen or an unsubstituted or substituted, linear or branched, alkyl radical having 1, 2, 3, 4, 5, 6, 7 or 8 carbon atoms,
   - R⁵: an unsubstituted or substituted, linear or branched, alkyl radical having 1, 2, 3, 4, 5, 6, 7 or 8 carbon atoms;
   hindered amines, and combinations thereof.

In another preferred embodiment of the presently claimed invention, the above composition is defined by k being an integer in the range of ≥ 3 to ≤ 25.

In another preferred embodiment of the presently claimed invention, the above composition is defined by the alkoxylated polytetrahydrofurane having a weight average molecular weight Mw in the range of 500 to 20000 g/mol determined according to DIN 55672-1 (polystyrene calibration standard).

In another preferred embodiment of the presently claimed invention, the above composition is defined by (m+m') being in the range of ≥ 3 to ≤ 65.

In another preferred embodiment of the presently claimed invention, the above composition is defined by the ratio of (m+m') to k being in the range of 0.3:1 to 6:1.

In another preferred embodiment of the presently claimed invention, the above composition is defined by m being an integer in the range of ≥ 1 to ≤ 25 and m' being an integer in the range of ≥ 1 to ≤ 25.

In another preferred embodiment of the presently claimed invention, the above composition is defined by R¹ denoting an unsubstituted, linear alkyl radical having 6, 7, 8, 9, 10, 11, 12, 13, 14, 15, 16, 17 or 18 carbon atoms.

In another preferred embodiment of the presently claimed invention, the above composition is defined by R³ denoting -CH₃.

In another preferred embodiment of the presently claimed invention, the above composition is defined as follows,
- m: is an integer in the range of ≥ 1 to ≤ 30,
- m': is an integer in the range of ≥ 1 to ≤ 30,
- (m+m'): is an integer in the range of ≥ 3 to ≤ 50,
- n: is an integer in the range of ≥ 3 to ≤ 45,
- n': is an integer in the range of ≥ 3 to ≤ 45,
- (n+n'): is an integer in the range of ≥ 6 to ≤ 90,
- p: is an integer in the range of ≥ 0 to ≤ 75,
- p': is an integer in the range of ≥ 0 to ≤ 75,
- k: is an integer in the range of ≥ 3 to ≤ 25,
- R¹: denotes an unsubstituted, linear alkyl radical having 6, 7, 8, 9, 10, 11, 12, 13, 14, 15, 16, 17 or 18 carbon atoms,
- R²: denotes -CH₂-CH₃, and
- R³: denotes -CH₃.

In another preferred embodiment of the presently claimed invention, the above composition is defined by the ratio of (m+m') to k being in the range of 0.3:1 to 6:1 and the ratio of (n+n') to k being in the range of 1.5:1 to 10:1.

In another preferred embodiment of the presently claimed invention, the above composition is defined as follows,
- m: is an integer in the range of ≥ 1 to ≤ 30,
- m': is an integer in the range of ≥ 1 to ≤ 30,
- (m+m'): is an integer in the range of ≥ 3 to ≤ 50,
- n: is an integer in the range of ≥ 0 to ≤ 45,
- n': is an integer in the range of ≥ 0 to ≤ 45,
- p: is an integer in the range of ≥ 3 to ≤ 45,
- p': is an integer in the range of ≥ 3 to ≤ 45,
- (p+p'): is an integer in the range of ≥ 6 to ≤ 90,
- k: is an integer in the range of ≥ 3 to ≤ 25,
- R¹: denotes an unsubstituted, linear alkyl radical having 6, 7, 8, 9, 10, 11, 12, 13, 14, 15, 16, 17 or 18 carbon atoms,
- R²: denotes -CH₂-CH₃, and
- R³: denotes -CH₃.

In another preferred embodiment of the presently claimed invention, the above composition is defined by the ratio of (m+m') to k being in the range of 0.3:1 to 6:1 and the ratio of (p+p') to k being in the range of 1.5:1 to 10:1.

In another preferred embodiment of the presently claimed invention, the above composition further comprises base stock, co-solvent and/or additives.

In another preferred embodiment of the presently claimed invention, the hydroquinone-type stabilizer is selected from the group consisting of hydroquinone monomethylether, 2-methyl-hydroquinone, 2- and/or 3-tert-butyl-4-hydroxyanisole and combinations thereof and the hindered amine is 2,2,6,6-tetramethylpiperidin-4-yl dodecanoate.

In another preferred embodiment of the presently claimed invention, the antioxidant is a combination of 4-methoxyphenol and unsubstituted phenoxazine.

The alkoxylated polytetrahydrofurane is the first essential component in the compositions according to the presently claimed invention.

The alkoxylated polytetrahydrofurane is defined based on the following general formula (I) 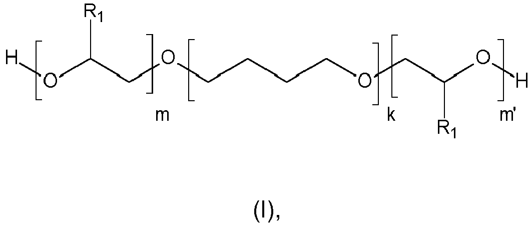 wherein
- m: is an integer in the range of ≥ 0 to ≤ 30,
- m': is an integer in the range of ≥ 0 to ≤ 30,
- (m+m'): is an integer in the range of ≥ 1 to ≤ 60,
- k: is an integer in the range of ≥ 2 to ≤ 30, and
- R¹: denotes an unsubstituted, linear or branched, alkyl radical having 6, 7, 8, 9, 10, 11, 12, 13, 14, 15, 16, 17, 18, 19, 20, 21, 22, 23, 24, 25, 26, 27 or 28 carbon atoms,
wherein the concentrations denoted by k, m and m' are distributed to form a block polymeric structure.

Hence, in another preferred embodiment, the presently claimed invention is directed to a composition in which the alkoxylated polytetrahydrofurane is defined according to the following general formula (II) 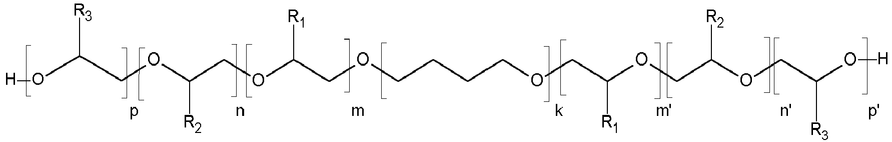 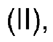 wherein
- m: is an integer in the range of ≥ 1 to ≤ 50,
- m': is an integer in the range of ≥ 1 to ≤ 50,
- (m+m'): is an integer in the range of ≥ 1 to ≤ 90,
- n: is an integer in the range of ≥ 0 to ≤ 75,
- n': is an integer in the range of ≥ 0 to ≤ 75,
- p: is an integer in the range of ≥ 0 to ≤ 75,
- p': is an integer in the range of ≥ 0 to ≤ 75,
- R¹: denotes an unsubstituted, linear or branched, alkyl radical having 6, 7, 8, 9, 10, 11, 12, 13, 14, 15, 16, 17, 18, 19, 20, 21, 22, 23, 24, 25, 26, 27 or 28 carbon atoms,
- R²: denotes -CH₂-CH₃, and
- R³: identical or different, denotes a hydrogen atom or -CH₃,
wherein the concentrations denoted by k are distributed to form a block polymeric structure and the concentrations denoted by p, p', n, n', m and m' are distributed to form a block polymeric structure or a random polymeric structure.

Hence, in another preferred embodiment, the presently claimed invention is directed to a composition in which the alkoxylated polytetrahydrofurane is defined according to the following general formula (II) 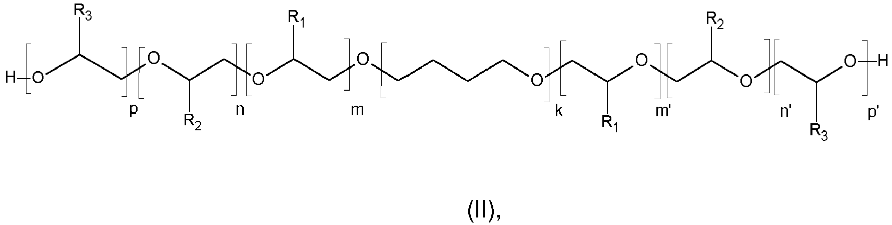 wherein
- m: is an integer in the range of ≥ 1 to ≤ 30,
- m': is an integer in the range of ≥ 1 to ≤ 30,
- (m+m'): is an integer in the range of ≥ 2 to ≤ 60,
- n: is an integer in the range of ≥ 0 to ≤ 45,
- n': is an integer in the range of ≥ 0 to ≤ 45,
- (n+n'): is an integer in the range of ≥ 0 to ≤ 80,
- p: is an integer in the range of ≥ 0 to ≤ 25,
- p': is an integer in the range of ≥ 0 to ≤ 25,
- (p+p'): is an integer in the range of ≥ 0 to ≤ 30,
- k: is an integer in the range of ≥ 2 to ≤ 30,
- R¹: denotes an unsubstituted, linear or branched, alkyl radical having 6, 7, 8, 9, 10, 11, 12, 13, 14, 15, 16, 17, 18, 19, 20, 21, 22, 23, 24, 25, 26, 27 or 28 carbon atoms,
- R²: denotes -CH₂-CH₃, and
- R³: identical or different, denotes a hydrogen atom or -CH₃,
wherein the concentrations denoted by k are distributed to form a block polymeric structure and the concatenations denoted by p, p', n, n', m and m' are distributed to form a block polymeric structure or a random polymeric structure.

As used herein, the term "branched" denotes a chain of atoms with one or more side chains attached to it. Branching occurs by the replacement of a substituent, e.g., a hydrogen atom, with a covalently bonded alkyl radical.

"Alkyl radical" denotes a moiety constituted solely of atoms of carbon and of hydrogen.

Alkoxylated polytetrahydrofuranes are *inter alia* described in US 6,423,107 B1. However, this patent is entirely silent about using alkoxylated polytetrahydrofuranes as lubricants.

The preparation of alkoxylated polyhydrofuranes is also described in WO 2014/184062 A1 and WO 2014/139935 A1. Accordingly, the skilled person will be familiar with the general procedures for preparing this class of compounds.

The claimed alkoxylated polytetrahydrofuranes are oil soluble, which means that, when mixed with mineral oils and/or polyalphaolefins, preferably low viscosity polyalphaolefins, in a weight ratio of 10:90, 50:50 and 90:10, the claimed alkoxylated polytetrahydrofuranes do not show phase separation after standing for 24 hours at room temperature for at least two weight ratios out of the three weight ratios 10:90, 50:50 and 90:10.

Preferably the alkoxylated polytetrahydrofuranes as present in the compositions according to the presently claimed invention have kinematic viscosity in the range of ≥ 50 mm²/s to ≤ 1500 mm²/s, more preferably in the range of ≥ 250 mm²/s to ≤ 1000 mm²/s, most preferably in the range of ≥ 250 mm²/s to ≤ 650 mm²/s, at 40 °C, determined according to ASTM D 445.

Preferably the alkoxylated polytetrahydrofuranes as present in the compositions according to the presently claimed invention have kinematic viscosity in the range of ≥ 25 mm²/s to ≤ 200 mm²/s, more preferably in the range of ≥ 30 mm²/s to ≤ 150 mm²/s, more preferably in the range of ≥ 30 mm²/s to ≤ 100 mm²/s, at 100 °C, determined according to ASTM D 445.

Preferably the alkoxylated polytetrahydrofuranes as present in the compositions according to the presently claimed invention have a pour point in the range of ≥ - 60 °C to ≤ 20 °C, more preferably in the range of ≥ - 50 °C to ≤ 15 °C, determined according to DIN ISO 3016.

Preferably the alkoxylated polytetrahydrofuranes as present in the compositions according to the presently claimed invention have a weight average molecular weight Mw in the range of 500 to 20000 g/mol, more preferably in the range of 2000 to 10000 g/mol, most preferably in the range of 2000 to 7000 g/mol, even more preferably in the range of 4000 to 7000 g/mol determined, determined according to DIN 55672-1.

Preferably the alkoxylated polytetrahydrofuranes as present in the compositions according to the presently claimed invention have a polydispersity in the range of 1,05 to 1,60, more preferably in the range of 1,05 to 1,50, most preferably in the range of 1,05 to 1,45, determined according to DIN 55672-1.

Preferably k is an integer in the range of ≥ 3 to ≤ 25, more preferably k is an integer in the range of ≥ 3 to ≤ 20, most preferably in the range of ≥ 5 to ≤ 20, even more preferably in the range of ≥ 6 to ≤ 16.

Preferably m is an integer in the range of ≥ 1 to ≤ 25 and m' is an integer in the range of ≥ 1 to ≤ 25, more preferably m is an integer in the range of ≥ 1 to ≤ 20 and m' is an integer in the range of ≥ 1 to ≤ 20.

Preferably (m+m') is an integer in the range of ≥ 3 to ≤ 65, more preferably (m+m') is an integer in the range of ≥ 3 to ≤ 50, even more preferably (m+m') is an integer in the range of ≥ 3 to ≤ 40.

Preferably the ratio of (m+m') to k is in the range of 0.3:1 to 6:1, more preferably in the range of 0.3:1 to 5:1, most preferably in the range of 0.3:1 to 4:1, even more preferably in the range of 0.3:1 to 3:1.

Preferably n is an integer in the range of ≥ 6 to ≤ 40 and n' is an integer in the range of ≥ 6 to ≤ 40, more preferably n is an integer in the range of ≥ 8 to ≤ 35 and p' is an integer in the range of ≥ 8 to ≤ 35.

Preferably (n+n') is an integer in the range of ≥ 10 to ≤ 80, more preferably (n+n') is an integer in the range of ≥ 15 to ≤ 70.

Preferably p is an integer in the range of ≥ 5 to ≤ 25 and p' is an integer in the range of ≥ 5 to ≤ 25, more preferably p is an integer in the range of ≥ 5 to ≤ 15 and p' is an integer in the range of ≥ 5 to ≤ 15.

Preferably (p+p') is an integer in the range of ≥ 10 to ≤ 30, more preferably (p+p') is an integer in the range of ≥ 15 to ≤ 30.

Preferably R¹ denotes an unsubstituted, linear alkyl radical having 6, 7, 8, 9, 10, 11, 12, 13, 14, 15, 16, 17 or 18 carbon atoms. More preferably R¹ denotes an unsubstituted, linear alkyl radical having 8, 9, 10, 11, 12, 13, 14, 15 or 16 carbon atoms. Most preferably R¹ denotes an unsubstituted, linear alkyl radical having 8, 9, 10, 11 or 12 carbon atoms.

In case the alkoxylated polytetrahydrofurane as present in the compositions according to the presently claimed invention comprises units, wherein R² denotes -CH₂-CH₃, the ratio of (n+n') to k is in the range of 1.5:1 to 10:1, more preferably in the range of 1.5:1 to 6:1, most preferably in the range of 2:1 to 5:1.

In case the alkoxylated polytetrahydrofurane as present in the compositions according to the presently claimed invention comprises units, wherein R³ denotes -CH₃, the ratio of (p+p') to k is in the range of 1.2:1 to 10:1, more preferably in the range of 1.2:1 to 6:1.

In another preferred embodiment, the alkoxylated polytetrahydrofurane as present in the compositions according to the presently claimed invention is defined by the following general formula (II) 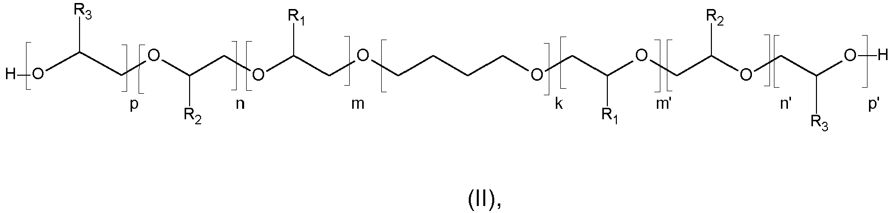 wherein
- m: is an integer in the range of ≥ 1 to ≤ 30,
- m': is an integer in the range of ≥ 1 to ≤ 30,
- (m+m'): is an integer in the range of ≥ 3 to ≤ 50,
- n: is an integer in the range of ≥ 3 to ≤ 45,
- n': is an integer in the range of ≥ 3 to ≤ 45,
- (n+n'): is an integer in the range of ≥ 6 to ≤ 90,
- p: is an integer in the range of ≥ 0 to ≤ 75,
- p': is an integer in the range of ≥ 0 to ≤ 75,
- k: is an integer in the range of ≥ 3 to ≤ 25,
- (p+p'): is an integer in the range of ≥ 0 to ≤ 30,
- k: is an integer in the range of ≥ 3 to ≤ 25,
- R¹: denotes an unsubstituted, linear alkyl radical having 6, 7, 8, 9, 10, 11, 12, 13, 14, 15, 16, 17 or 18 carbon atoms,
- R²: denotes -CH₂-CH₃, and
- R³: denotes -CH₃,
wherein the concentrations denoted by k are distributed to form a block polymeric structure and the concentrations denoted by p, p', n, n', m and m' are distributed to form a block polymeric structure or a random polymeric structure.

In another preferred embodiment, the alkoxylated polytetrahydrofurane as present in the compositions according to the presently claimed invention is defined by the following general formula (II) 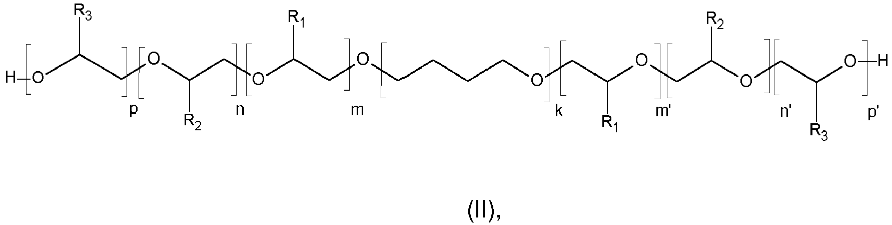 wherein
- m: is an integer in the range of ≥ 1 to ≤ 30,
- m': is an integer in the range of ≥ 1 to ≤ 30,
- (m+m'): is an integer in the range of ≥ 3 to ≤ 50,
- n: is an integer in the range of ≥ 3 to ≤ 45,
- n': is an integer in the range of ≥ 3 to ≤ 45,
- (n+n'): is an integer in the range of ≥ 6 to ≤ 90,
- p: is an integer in the range of ≥ 0 to ≤ 75,
- p': is an integer in the range of ≥ 0 to ≤ 75,
- k: is an integer in the range of ≥ 3 to ≤ 25,
- (p+p'): is an integer in the range of ≥ 0 to ≤ 30,
- k: is an integer in the range of ≥ 3 to ≤ 25,
- R¹: denotes an unsubstituted, linear alkyl radical having 6, 7, 8, 9, 10, 11, 12, 13, 14, 15, 16, 17 or 18 carbon atoms,
- R²: denotes -CH₂-CH₃, and
- R³: denotes -CH₃,
wherein the concentrations denoted by k are distributed to form a block polymeric structure and the concentrations denoted by p, p', n, n', m and m' are distributed to form a block polymeric structure or a random polymeric structure, wherein the ratio of (m+m') to k is in the range of 0.3:1 to 6:1 and the ratio of (n+n') to k is in the range of 1.5:1 to 10:1.

In another preferred embodiment, the alkoxylated polytetrahydrofurane as present in the compositions according to the presently claimed invention is defined by the following general formula (II) 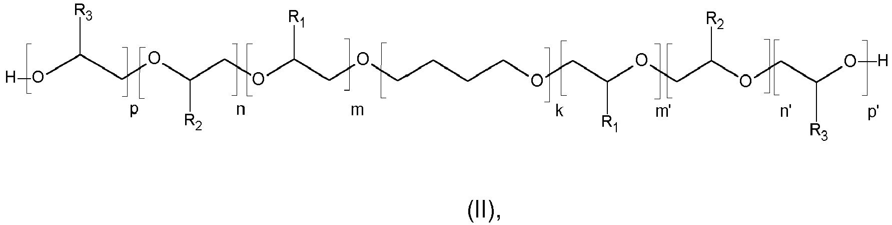 wherein
- m: is an integer in the range of ≥ 1 to ≤ 25,
- m': is an integer in the range of ≥ 1 to ≤ 25,
- (m+m'): is an integer in the range of ≥ 3 to ≤ 40,
- n: is an integer in the range of ≥ 6 to ≤ 40,
- n': is an integer in the range of ≥ 6 to ≤ 40,
- (n+n'): is an integer in the range of ≥ 12 to ≤ 70,
- p: is an integer in the range of ≥ 0 to ≤ 25,
- p': is an integer in the range of ≥ 0 to ≤ 25,
- (p+p'): is an integer in the range of ≥ 0 to ≤ 30,
- k: is an integer in the range of ≥ 5 to ≤ 20,
- R¹: denotes an unsubstituted, linear alkyl radical having 8, 9, 10, 11 or 12 carbon atoms,
- R²: denotes -CH₂-CH₃, and
- R³: denotes -CH₃,
wherein the concentrations denoted by k are distributed to form a block polymeric structure and the concentrations denoted by p, p', n, n', m and m' are distributed to form a block polymeric structure or a random polymeric structure,
wherein the ratio of (m+m') to k is in the range of 0.3:1 to 4:1 and the ratio of (n+n') to k is in the range of 1.5:1 to 5:1.

In another preferred embodiment, the alkoxylated polytetrahydrofurane as present in the compositions according to the presently claimed invention is defined by the following general formula (II) 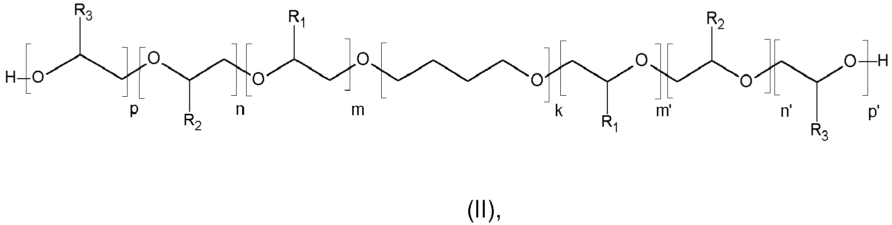 wherein
- m: is an integer in the range of ≥ 1 to ≤ 25,
- m': is an integer in the range of ≥ 1 to ≤ 25,
- (m+m'): is an integer in the range of ≥ 3 to ≤ 50,
- n: is an integer in the range of ≥ 0 to ≤ 45,
- n': is an integer in the range of ≥ 0 to ≤ 45,
- (n+n'): is an integer in the range of ≥ 0 to ≤ 80,
- p: is an integer in the range of ≥ 3 to ≤ 45,
- p': is an integer in the range of ≥ 3 to ≤ 45,
- (p+p'): is an integer in the range of ≥ 6 to ≤ 90,
- k: is an integer in the range of ≥ 3 to ≤ 25,
- R¹: denotes an unsubstituted, linear alkyl radical having 6, 7, 8, 9, 10, 11, 12, 13, 14, 15, 16, 17 or 18 carbon atoms,
- R²: denotes -CH₂-CH₃, and
- R³: denotes -CH₃,
wherein the concentrations denoted by k are distributed to form a block polymeric structure and the concentrations denoted by p, p', n, n', m and m' are distributed to form a block polymeric structure or a random polymeric structure.

In another preferred embodiment, the alkoxylated polytetrahydrofurane as present in the compositions according to the presently claimed invention is defined by the following general formula (II) 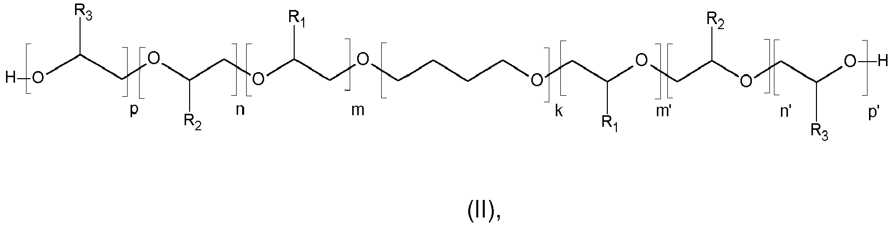 wherein
- m: is an integer in the range of ≥ 1 to ≤ 30,
- m': is an integer in the range of ≥ 1 to ≤ 30,
- (m+m'): is an integer in the range of ≥ 3 to ≤ 50,
- n: is an integer in the range of ≥ 0 to ≤ 45,
- n': is an integer in the range of ≥ 0 to ≤ 45,
- (n+n'): is an integer in the range of ≥ 0 to ≤ 80,
- p: is an integer in the range of ≥ 3 to ≤ 45,
- p': is an integer in the range of ≥ 3 to ≤ 45,
- (p+p'): is an integer in the range of ≥ 6 to ≤ 90,
- k: is an integer in the range of ≥ 3 to ≤ 25,
- R¹: denotes an unsubstituted, linear alkyl radical having 6, 7, 8, 9, 10, 11, 12, 13, 14, 15, 16, 17 or 18 carbon atoms,
- R²: denotes -CH₂-CH₃, and
- R³: denotes -CH₃,
wherein the concentrations denoted by k are distributed to form a block polymeric structure and the concentrations denoted by p, p', n, n', m and m' are distributed to form a block polymeric structure or a random polymeric structure, wherein the ratio of (m+m') to k is in the range of 0.3:1 to 6:1 and the ratio of (p+p') to k is in the range of 1.5:1 to 10:1.

In another preferred embodiment, the alkoxylated polytetrahydrofurane as present in the compositions according to the presently claimed invention is defined by the following general formula (II) 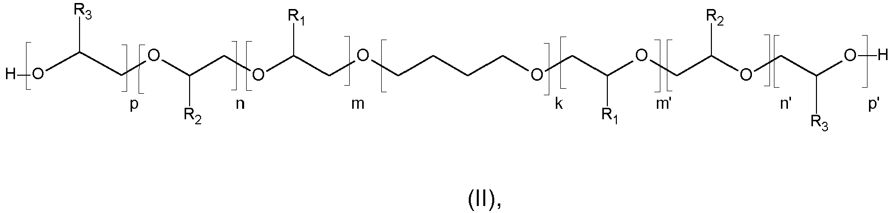 wherein
- m: is an integer in the range of ≥ 1 to ≤ 25,
- m': is an integer in the range of ≥ 1 to ≤ 25,
- (m+m'): is an integer in the range of ≥ 3 to ≤ 50,
- n: is an integer in the range of ≥ 0 to ≤ 45,
- n': is an integer in the range of ≥ 0 to ≤ 45,
- (n+n'): is an integer in the range of ≥ 0 to ≤ 80,
- p: is an integer in the range of ≥ 5 to ≤ 20,
- p': is an integer in the range of ≥ 5 to ≤ 20,
- (p+p'): is an integer in the range of ≥ 10 to ≤ 30,
- k: is an integer in the range of ≥ 5 to ≤ 20,
- R¹: denotes an unsubstituted, linear alkyl radical having 8, 9, 10, 11 or 12 carbon atoms,
- R²: denotes -CH₂-CH₃, and
- R³: denotes -CH₃,
wherein the concentrations denoted by k are distributed to form a block polymeric structure and the concentrations denoted by p, p', n, n', m and m' are distributed to form a block polymeric structure or a random polymeric structure, wherein the ratio of (m+m') to k is in the range of 0.3:1 to 4:1 and the ratio of (p+p') to k is in the range of 1.5:1 to 5:1.

The alkoxylated polytetrahydrofuranes are prepared/obtained by reacting at least one polytetra-hydrofurane block polymer with at least one C₈-C₃₀ epoxy alkane and optionally at least one epoxide selected from the group consisting of ethylene oxide, propylene oxide and butylene oxide in the presence of at least one catalyst. In case at least one epoxide selected from the group consisting of ethylene oxide, propylene oxide and butylene oxide is used, the at least one C₈-C₃₀ epoxy alkane and the at least one epoxide selected from the group consisting of ethylene oxide, propylene oxide and butylene oxide can either be added as a mixture of epoxides to obtain a random copolymer or in portions, whereby each portion contains a different epoxide, to obtain a block copolymer.

Preferably the at least one C₈-C₃₀ epoxy alkane is selected from the group consisting of the group consisting of 1,2-epoxyoctane; 1,2-epoxynonane; 1,2-epoxydecane; 1,2-epoxyundecane; 1,2-epoxydodecane; 1,2-epoxytridecane; 1,2-epoxytetradecane; 1,2-epoxypentadecane; 1,2-epoxyhexadecane; 1,2-epoxyheptadecane; 1,2-epoxyoctadecane; 1,2-epoxynonadecane; 1,2-epoxyicosane; 1,2-epoxyunicosane; 1,2-epoxydocosane; 1,2-epoxytricosane; 1,2-epoxytetracosane; 1,2-epoxypentacosane; 1,2-epoxyhexacosane; 1,2-epoxyheptacosane; 1,2-epoxyoctacosane; 1,2-epoxynonacosane and 1,2-epoxytriacontane.

Preferably the at least one catalyst is a base or a double metal cyanide catalyst (DMC catalyst). More preferably the at least one catalyst is selected from the group consisting of the group consisting of alkaline earth metal hydroxides such as calcium hydroxide, strontium hydroxide and barium hydroxide, alkali metal hydroxides such as lithium hydroxide, sodium hydroxide, potassium hydroxide, rubidium hydroxide and caesium hydroxide and alkali metal alkoxylates such as potassium tert-butoxylate. Most preferably the at least one catalyst is sodium hydroxide or potassium tert-butoxylate. Most preferably the at least one catalyst is potassium tert-butoxylate.

In case the catalyst is a base, any inert solvents capable of dissolving alkoxylated polytetra-hydrofurane and polytetrahydrofurane may be used as solvents during the reaction or as solvents required for working up the reaction mixture in cases where the reaction is carried out without solvents. The following solvents are mentioned as examples: methylene chloride, trichloroethylene, tetrahydrofuran, dioxane, methyl ethyl ketone, methylisobutyl ketone, ethyl acetate and isobutyl acetate.

In case the catalyst is a base, the amount of catalysts used is preferably in the range from 0.01 to 1.0, more preferably in the range from 0.05 to 0.5, % by weight, based on the total amount of the alkoxylated polytetrahydrofurane. The reaction is preferably carried out at a temperature in the range of 70 to 200° C, more preferably from 100 to 160° C. The pressure is preferably in the range from 1 bar to 150 bar, more preferably in the range from 3 to 30 bar.

The second essential component in the compositions according to the presently claimed invention is a suitable antioxidant compound that is capable of stabilizing the composition with alkoxylated polytetrahydrofurane against oxidative degradation.

The antioxidant compound is selected from the group consisting of the group consisting of unsubstituted phenoxazine or phenoxazine which is substituted with 1, 2 or 3 substituents selected from the group consisting of-C₁₋₁₀-alkyl and -O-C₁₋₁₀-alkyl; unsubstituted phenothiazine or phenothiazine which is substituted with 1, 2 or 3 substituents selected from the group consisting of - C₁₋₁₀-alkyl and -O-C₁₋₁₀-alkyl; hydroquinone-type stabilizers of general formula (III), 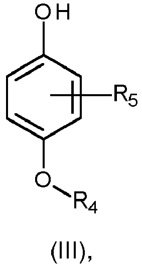 wherein
- R⁴: denotes hydrogen or an unsubstituted or substituted, linear or branched, alkyl radical having 1, 2, 3, 4, 5, 6, 7 or 8 carbon atoms,
- R⁵: denotes hydrogen or an unsubstituted or substituted, linear or branched, alkyl radical having 1, 2, 3, 4, 5, 6, 7 or 8 carbon atoms; and hindered amines, and combinations thereof.

Preferably the antioxidant is selected from the group consisting of the group consisting of unsubstituted phenoxazine or phenoxazine which is substituted with 1, 2 or 3 substituents selected from the group consisting of methyl, ethyl and propyl; unsubstituted phenothiazine or phenothiazine which is substituted with 1, 2 or 3 substituents selected from the group consisting of methyl, ethyl and propyl; hydroquinone-type stabilizers of general formula (III), 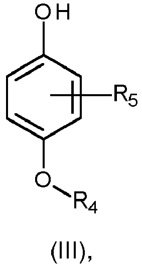 wherein R⁴ denotes hydrogen or an unsubstituted, linear or branched, alkyl radical having 1, 2, 3 or 4 carbon atoms, R⁵ denotes hydrogen or an unsubstituted, linear or branched, alkyl radical having 1, 2, 3 or 4 carbon atoms; hindered amines, and combinations thereof.

Phenoxazines include 10H-phenoxazine, which is the unsubstituted phenoxazine, as well as substituted phenoxazine which is substituted with 1, 2 or 3 substituents selected from the group consisting of -C₁₋₁₀-alkyl and -O-C₁₋₁₀-alkyl. Preferably the above-stated -C₁₋₁₀-alkyl may in each case linear or branched and may be substituted with 1, 2, 3, 4 or 5 substituents mutually independently selected from the group consisting of F, Cl, Br, I, -CN, -CF₃, -OH, -NH₂, -O-CF₃, -SH, -O-CH₃, -O-C₂H₅ and -O-C₃H₇. More preferably phenoxazine is substituted with 1, 2 or 3 substituents selected from the group consisting of methyl, ethyl, n-propyl, isopropyl, n-butyl, 2-butyl, isobutyl, tert.-butyl, -O-CH₃, -O-C₂H₅ and -O-C₃H₇.

Phenothiazines include 10H-phenothiazine, which is the unsubstituted phenothiazine, as well as substituted phenothiazine which is substituted with 1, 2 or 3 substituents selected from the group consisting of -C₁₋₁₀-alkyl and -O-C₁₋₁₀-alkyl. Preferably the above-stated -C₁₋₁₀-alkyl may in each case linear or branched and may be substituted with 1, 2, 3, 4 or 5 substituents mutually independently selected from the group consisting of F, Cl, Br, I, -CN, -CF₃, -OH, -NH₂, -O-CF₃,-SH, -O-CH₃, -O-C₂H₅ and -O-C₃H₇. More preferably phenothiazine is substituted with 1, 2 or 3 substituents selected from the group consisting of methyl, ethyl, n-propyl, isopropyl, n-butyl, 2-butyl, isobutyl, tert.-butyl, -O-CH₃, -O-C₂H₅ and -O-C₃H₇.

Hydroquinone-type stabilizing compounds are capable of stabilizing other compounds against oxidative degradation. Hydroquinones are the para isomers of dihydroxybenzenes and include unsubstituted 1,4-benzenediole (hydroquinone) and substituted derivatives of hydroquinone.

Hydroquinone-type stabilizers according to the presently claimed invention also include the corresponding methoxylated derivatives (hydroxyanisoles), like hydroquinone monomethylether or 2- and/or 3-tert-butyl-4-hydroxyanisole (butylated hydroxyanisole, BHA), which can also be further substituted as defined above.

Preferred hydroquinone-type stabilizers are hydroquinone monomethylether (para-methoxyphenol, MEHQ) and/or 2-methylhydroquinone (2-MDHQ; 2,5-dihydroxytoluol) and/or 2-and/or 3-tert-butyl-4-hydroxyanisole.

Hindered amines, or sometimes termed hindered amine light stabilizers, are effective radical scavengers. In an oxidative environment, a nitroxyl radical is formed from the hindered amine which is the active species in terms of radical scavenging.

The hindered amine is preferably a sterically hindered amine. More preferably the hindered amine is a 2,2,6,6-tetramethyl piperidine (derivative).

A very preferred hindered amine is 2,2,6,6-tetramethylpiperidin-4-yl dodecanoate.

Other very preferred hindered amines have the following structures: 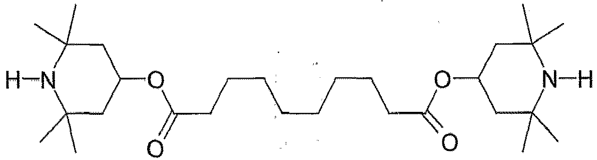 Tinuvin® 770 (Bis(2,2,6,6-tetramethyl-4-piperidyl)sebacate; CAS 52829-07-9), 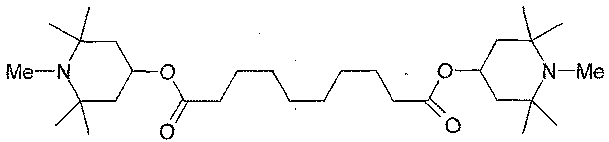 Tinuvin® 765 (Bis(1,2,2,6,6-pentamethyl-4-piperidinyl) sebacate) CAS 41556-26-7; 82919-37-7), 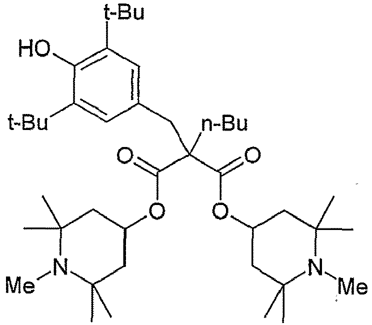 Tinuvin® 144 (Bis(1,2,2,6,6-pentamethyl-4-piperidyl) [[3,5-bis(1,1-dimethylethyl)-4-hydroxyphenyl]methyl]butylmalonate; CAS 63843-89-0),

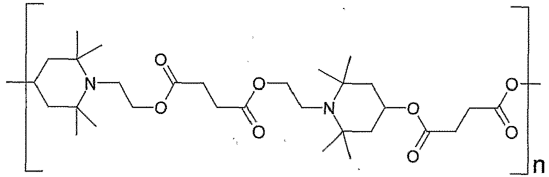

Tinuvin® 622 (Poly-4-hydroxy-2,2,6,6-tetramethyl-1-piperidine ethanol-alt-1,4-butanedioic acid; CAS 65447-77-0), 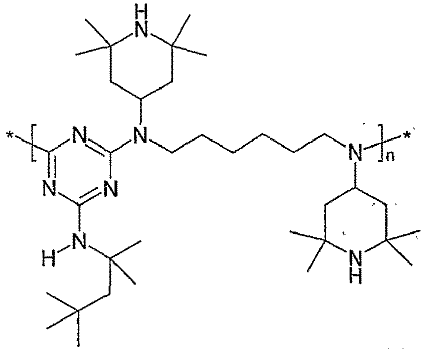 Chimassorb® 944 (Poly[[6-[(1,1,3,3-tetramethylbutyl)amino]-s-triazine-2,4-diyl]-[(2,2,6,6-tetramethyl-4-piperidyl)imino]-hexamethylene-[(2,2,6,6-tetramethyl-4-piperidyl)imino]; CAS 71878-19-8),

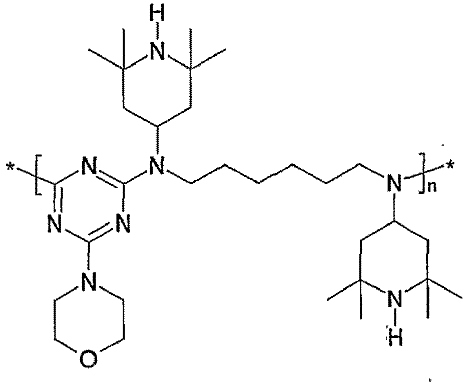

Cyasorb® UV-3346 (Poly[N,N'-bis(2,2,6,6-tetramethyl-4-piperidinyl)-1,6-hexanediamine-co-2,4-dichloro-6-morpholino-1,3,5-triazine]; CAS 82451-48-7).

The antioxidant compounds can be used alone or in combination. One very preferred combination of antioxidants is the combination of unsubstituted phenoxazine and hydroquinone monomethylether, particularly in relative amounts per weight (alternatively by mole) of 1:1.

The relative amount of antioxidant in the compositions according to the presently claimed invention is in the range is 0.01 to 3.0 wt.-%, preferably 0.05 to 1.0 wt.-%, more preferably 0.08 to 0.8 wt.-%, even more preferably 0.08 to 0.6 wt.-%, and most preferably 0.09 to 0.4 wt.-%.

In another embodiment, the presently claimed invention is directed to a lubricant composition, or a lubricant oil composition. Accordingly, the composition according to the presently claimed invention comprising at least one alkoxylated polytetrahydrofurane as defined above or a mixture of polytetrahydrofuranes as defined above in combination with an antioxidant as defined above is used for the preparation of a lubricating oil composition.

By the term "lubricant", in the sense of the presently claimed invention, is meant a substance capable of substantially reducing friction between surfaces, preferably in an engine.

In another embodiment, the presently claimed invention is directed to a composition, preferably a lubricant oil composition, comprising at least one alkoxylated polytetrahydrofurane as defined above or a mixture of alkoxylated polytetrahydrofurane as defined above in combination with the antioxidant as defined above.

Preferably, such composition comprises ≥ 1 % to ≤ 10 % by weight or ≥ 1 % to ≤ 40 % by weight or ≥ 20 % to ≤ 100 % by weight, more preferably ≥ 1 % to ≤ 5 % by weight or ≥ 1 % to ≤ 35 % by weight or ≥ 25 % to ≤ 100 % by weight, most preferably ≥ 1 % to ≤ 2 % by weight or ≥ 2 % to ≤ 30 % by weight or ≥ 30 % to ≤ 100 % by weight, of at least one alkoxylated polytetra-hydrofurane as defined above, relative to the total amount of the lubricating oil composition.

In other words, in one preferred embodiment, the compositions according to the presently claimed invention consist of alkoxylated polytetrahydrofurane according to the presently claimed invention and an antioxidant according to the presently claimed invention, optionally further comprising only performance additives as defined herein. These preferred compositions do not contain any base stock component or co-solvents.

Preferably, the composition according to the presently claimed invention has a friction coefficient in the range of 0.003 to 0.030 at 25% slide roll ratio (SRR) determined using mini-traction machine (MTM) measurements at 70 °C and 1 GPa.

In another embodiment, the presently claimed invention relates to a composition which is (or which is used as) industrial oil comprising at least one alkoxylated polytetrahydrofurane and antioxidant.

The compositions according to the presently claimed invention comprising at least one alkoxylated polytetrahydrofurane as defined above or a mixture of polytetrahydrofuranes as defined above and an antioxidant according to the presently claimed invention can be used for various applications, preferably as lubricant oil compositions, such as light, medium and heavy duty engine oils, industrial engine oils, marine engine oils, automotive engine oils, crankshaft oils, compressor oils, refrigerator oils, hydrocarbon compressor oils, very low-temperature lubricating oils and fats, high temperature lubricating oils and fats, wire rope lubricants, textile machine oils, refrigerator oils, aviation and aerospace lubricants, aviation turbine oils, transmission oils, gas turbine oils, spindle oils, spin oils, traction fluids, transmission oils, plastic transmission oils, passenger car transmission oils, truck transmission oils, industrial transmission oils, industrial gear oils, insulating oils, instrument oils, brake fluids, transmission liquids, shock absorber oils, heat distribution medium oils, transformer oils, fats, chain oils, minimum quantity lubricants for metalworking operations, oil to the warm and cold working, oil for water-based metalworking liquids, oil for neat oil metalworking fluids, oil for semi-synthetic metalworking fluids, oil for synthetic metalworking fluids, drilling detergents for the soil exploration, hydraulic oils, in biodegradable lubricants or lubricating greases or waxes, chain saw oils, release agents, moulding fluids, gun, pistol and rifle lubricants or watch lubricants and food grade approved lubricants.

Such lubricant oil compositions are useful for modifying, i.e. reducing the friction.

The compositions according to the presently claimed invention when used as lubricant oil compositions further comprise base stocks, co-solvents and/or a variety of different additives in varying ratios.

Preferably the lubricating oil composition further comprises base stocks selected from the group consisting of mineral oils (Group I, II or III oils), polyalphaolefins (Group IV oils), polymerized and interpolymerized olefins, alkyl naphthalenes, alkylene oxide polymers, silicone oils, phosphate esters and carboxylic acid esters (Group V oils). In one embodiment of the presently claimed invention, the lubricating oil comprises ≥ 50 % to ≤ 99 % by weight or ≥ 80 % to ≤ 99 % by weight or ≥ 90 % to ≤ 99 % by weight base stocks, related to the total amount of the lubricating oil composition.

Definitions for the base stocks in this invention are the same as those found in the American Petroleum Institute (API) publication "Engine Oil Licensing and Certification System", Industry Services Department, Fourteenth Edition, December 1996, Addendum 1, December 1998. Said publication categorizes base stocks as follows:
a) Group I base stocks contain less than 90 percent saturates and/or greater than 0.03 percent sulphur and have a viscosity index greater than or equal to 80 and less than 120 using the test methods specified in the following table
b) Group II base stocks contain greater than or equal to 90 percent saturates and less than or equal to 0.03 percent sulphur and have a viscosity index greater than or equal to 80 and less than 120 using the test methods specified in the following table
c) Group III base stocks contain greater than or equal to 90 percent saturates and less than or equal to 0.03 percent sulphur and have a viscosity index greater than or equal to 120 using the test methods specified in the following table

### Analytical Methods for Base Stock

| Property | Test Method |
|---|---|
| Saturates | ASTM D 2007 |
| Viscosity Index | ASTM D 2270 |
| Sulphur | ASTM D 2622 |
| | ASTM D 4294 |
| | ASTM D 4927 |
| | ASTM D 3120 |

Group IV base stocks contain polyalphaolefins. Synthetic lower viscosity fluids suitable for the presently claimed invention include the polyalphaolefins (PAOs) and the synthetic oils from the hydrocracking or hydroisomerization of Fischer Tropsch high boiling fractions including waxes. These are both stocks comprised of saturates with low impurity levels consistent with their synthetic origin. The hydroisomerized Fischer Tropsch waxes are highly suitable base stocks, comprising saturated components of iso-paraffinic character (resulting from the isomerization of the predominantly n-paraffins of the Fischer Tropsch waxes) which give a good blend of high viscosity index and low pour point. Processes for the hydroisomerization of Fischer Tropsch waxes are described in U.S. Patents 5,362,378; 5,565,086; 5,246,566 and 5,135,638, as well in EP 710710, EP 321302 and EP 321304.

Polyalphaolefins suitable for the presently claimed invention, as either lower viscosity or high viscosity fluids depending on their specific properties, include known PAO materials which typically comprise relatively low molecular weight hydrogenated polymers or oligomers of alphaolefins which include but are not limited to C₂ to about C₃₂ alphaolefins with the C₈ to about C ₁₆ alphaolefins, such as 1-octene, 1-decene, 1-dodecene and the like being preferred. The preferred polyalphaolefins are poly-1-octene, poly-1-decene, and poly-1-dodecene, although the dimers of higher olefins in the range of C₁₄ to C₁₈ provide low viscosity base stocks.

Low viscosity PAO fluids suitable for the presently claimed invention, may be conveniently made by the polymerization of an alphaolefin in the presence of a polymerization catalyst such as the Friedel-Crafts catalysts including, for example, aluminum trichloride, boron trifluoride or complexes of boron trifluoride with water, alcohols such as ethanol, propanol or butanol, carboxylic acids or esters such as ethyl acetate or ethyl propionate. For example, the methods disclosed by U.S. Patents 4,149,178 or 3,382,291 may be conveniently used herein. Other descriptions of PAO synthesis are found in the following U.S. Patents: 3,742,082 (Brennan); 3,769,363 (Brennan); 3,876,720 (Heilman); 4,239,930 (Allphin); 4,367,352 (Watts); 4,413,156 (Watts); 4,434,408 (Larkin); 4,910,355 (Shubkin); 4,956,122 (Watts); and 5,068,487 (Theriot).

Group V base stocks contain any base stocks not described by Groups I to IV. Examples of Group V base stocks include alkyl naphthalenes, alkylene oxide polymers, silicone oils, phosphate esters and carboxylic acid esters.

Synthetic lubricating oils include hydrocarbon oils and halo-substituted hydrocarbon oils such as polymerized and interpolymerized olefins (e.g., polybutylenes, polypropylenes, propylene-isobutylene copolymers, chlorinated polybutylenes, poly(1-hexenes), poly(1-octenes), poly(1-decenes)); alkylbenzenes (e.g., dodecylbenzenes, tetradecylbenzenes, dinonylbenzenes, di(2-ethylhexyl)benzenes); polyphenyls (e.g., biphenyls, terphenyls, alkylated polyphenols); and alkylated diphenyl ethers and alkylated diphenyl sulphides and derivative, analogs and homologs thereof.

Further carboxylic acid esters suitable for the presently claimed invention include the esters of mono and polybasic acids with monoalkanols (simple esters) or with mixtures of mono and polyalkanols (complex esters), and the polyol esters of monocarboxylic acids (simple esters), or mixtures of mono and polycarboxylic acids (complex esters). Esters of the mono/polybasic type include, for example, the esters of monocarboxylic acids such as heptanoic acid, and dicarboxylic acids such as phthalic acid, succinic acid, alkyl succinic acid, alkenyl succinic acid, maleic acid, azelaic acid, suberic acid, sebacic acid, fumaric acid, adipic acid, linoleic acid dimer, malonic acid, alkyl malonic acid, alkenyl malonic acid, etc., with a variety of alcohols such as butyl alcohol, hexyl alcohol, dodecyl alcohol, 2-ethylhexyl alcohol, or mixtures thereof with polyalkanols, etc. Specific examples of these types of esters include nonyl heptanoate, dibutyl adipate, di(2-ethylhexyl) sebacate, di-n-hexyl fumarate, dioctyl sebacate, diisooctyl azelate, diisodecyl azelate, dioctyl phthalate, didecyl phthalate, dieicosyl sebacate, dibutyl -TMP- adipate, etc.

Also suitable for the presently claimed invention are esters, such as those obtained by reacting one or more polyhydric alcohols, preferably the hindered polyols such as the neopentyl polyols, e.g. neopentyl glycol, trimethylol ethane, 2-methyl-2-propyl-1,3-propanediol, trimethylol propane, trimethylol butane, pentaerythritol and dipentaerythritol with monocarboxylic acids containing at least 4 carbons, normally the C₅ to C₃₀ acids such as saturated straight chain fatty acids including caprylic acid, capric acid, lauric acid, myristic acid, palmitic acid, stearic acid, arachic acid, and behenic acid, or the corresponding branched chain fatty acids or unsaturated fatty acids such as oleic acid, or mixtures thereof, with polycarboxylic acids.

Alkylene oxide polymers and interpolymers and derivatives thereof where the terminal hydroxyl groups have been modified by esterification, etherification, etc., constitute another class of known synthetic lubricating oils. These are exemplified by polyoxyalkylene polymers prepared by polymerization of ethylene oxide or propylene oxide, and the alkyl and aryl ethers of polyoxyalkylene polymers (e.g., methyl-polyiso-propylene glycol ether having a molecular weight of 1000 or diphenyl ether of poly-ethylene glycol having a molecular weight of 1000 to 1500); and mono- and polycarboxylic esters thereof, for example, the acetic acid esters, mixed C₃-C₈ fatty acid esters and C₁₃ Oxo acid diester of tetraethylene glycol.

Silicon-based oils such as the polyalkyl-, polyaryl-, polyalkoxy- or polyaryloxysilicone oils and silicate oils comprise another useful class of synthetic lubricants; such oils include tetraethyl silicate, tetraisopropyl silicate, tetra-(2- ethylhexyl)silicate, tetra-(4-methyl-2-ethylhexyl)silicate, tetra-(p-tert-butyl-phenyl) silicate, hexa-(4-methyl-2-ethylhexyl)disiloxane, oly(methyl)siloxanes and poly(methylphenyl)siloxanes. Other synthetic lubricating oils include liquid esters of phosphorous-containing acids (e.g., tricresyl phosphate, trioctyl phosphate, diethyl ester of decylphosphonic acid) and polymeric tetrahydrofurans.

Particularly in case that the compositions according to the presently claimed invention are used as lubricant oil compositions, the lubricating oil compositions optionally further include at least one other performance additive. The other performance additives include dispersants, metal deactivators, detergents, viscosity modifiers, extreme pressure agents (typically boron- and/or sulphur- and/or phosphorus- containing), anti-wear agents, corrosion inhibitors, foam inhibitors, demulsifiers, pour point depressants, seal swelling agents, friction modifiers and mixtures thereof.

The total combined amount of the other performance additives (excluding the viscosity modifiers and the antioxidant as defined otherwise) present on an oil free basis may include ranges of 0 % by weight to 25 % by weight, or 0.01 % by weight to 20 % by weight, or 0.1 % by weight to 15 % by weight or 0.5 % by weight to 10 % by weight, or 1 to 5 % by weight of the composition.

Although one or more of the other performance additives may be present, it is common for the other performance additives to be present in different amounts relative to each other.

In one embodiment the compositions further includes one or more viscosity modifiers.

When present the viscosity modifier may be present in an amount of 0.5 % by weight to 70 % by weight, 1 % by weight to 60 % by weight, or 5 % by weight to 50 % by weight, or 10 % by weight to 50 % by weight of the lubricating composition.

Viscosity modifiers include (a) polymethacrylates, (b) esterified copolymers of (II) a vinyl aromatic monomer and (ii) an unsaturated carboxylic acid, anhydride, or derivatives thereof, (c) esterified interpolymers of (II) an alpha-olefin; and (ii) an unsaturated carboxylic acid, anhydride, or derivatives thereof, or (d) hydrogenated copolymers of styrene-butadiene, (e) ethylene- propylene copolymers, (f) polyisobutenes, (g) hydrogenated styrene-isoprene polymers, (h) hydrogenated isoprene polymers, or (II) mixtures thereof.

In one embodiment the viscosity modifier includes (a) a polymethacrylate, (b) an esterified copolymer of (II) a vinyl aromatic monomer; and (ii) an unsaturated carboxylic acid, anhydride, or derivatives thereof, (c) an esterified interpolymer of (II) an alpha-olefin; and (ii) an unsaturated carboxylic acid, anhydride, or derivatives thereof, or (d) mixtures thereof.

Extreme pressure agents include compounds containing boron and/or sulphur and/or phosphorus.

The extreme pressure agent may be present in the lubricating composition at 0 % by weight to 20 % by weight, or 0.05 % by weight to 10 % by weight, or 0.1 % by weight to 8 % by weight of the lubricating composition.

In one embodiment the extreme pressure agent is a sulphur- containing compound. In one embodiment the sulphur-containing compound may be a sulphurised olefin, a polysulphide, or mixtures thereof. Examples of the sulphurised olefin include a sulphurised olefin derived from propylene, isobutylene, pentene; an organic sulphide and/or polysulphide including benzyldi-sulphide; bis-(chlorobenzyl) disulphide; dibutyl tetrasulphide; di-tertiary butyl polysulphide; and sulphurised methyl ester of oleic acid, a sulphurised alkylphenol, a sulphurised dipentene, a sulphurised terpene, a sulphurised Diels-Alder adduct, an alkyl sulphenyl N'N- dialkyl dithiocarbamates; or mixtures thereof.

In one embodiment the sulphurised olefin includes a sulphurised olefin derived from propylene, isobutylene, pentene or mixtures thereof.

In one embodiment the extreme pressure agent sulphur-containing compound includes a dimercaptothiadiazole or derivative, or mixtures thereof. Examples of the dimercaptothiadiazole include compounds such as 2,5-dimercapto-1,3,4-thiadiazole or a hydrocarbyl-substituted 2,5-dimercapto-1,3,4-thiadiazole, or oligomers thereof. The oligomers of hydrocarbyl-substituted 2,5-dimercapto-1,3,4-thiadiazole typically form by forming a sulphur-sulphur bond between 2,5-dimercapto-1,3,4-thiadiazole units to form derivatives or oligomers of two or more of said thiadiazole units. Suitable 2,5-dimercapto-1,3,4-thiadiazole derived compounds include for example 2,5-bis(tert-nonyldithio)-1,3,4-thiadiazole or 2-tert-nonyldithio-5-mercapto-1,3,4-thiadiazole. The number of carbon atoms on the hydrocarbyl substituents of the hydrocarbyl-substituted 2,5-dimercapto-1,3,4-thiadiazole typically include 1 to 30, or 2 to 20, or 3 to 16.

In one embodiment the dimercaptothiadiazole may be a thiadiazole-functionalised dispersant. A detailed description of the thiadiazole-functionalised dispersant is described is paragraphs [0028] to [0052] of International Publication WO 2008/014315.

The thiadiazole-functionalised dispersant may be prepared by a method including heating, reacting or complexing a thiadiazole compound with a dispersant substrate. The thiadiazole compound may be covalently bonded, salted, complexed or otherwise solubilised with a dispersant, or mixtures thereof.

The relative amounts of the dispersant substrate and the thiadiazole used to prepare the thiadiazole-functionalised dispersant may vary. In one embodiment the thiadiazole compound is present at 0.1 to 10 parts by weight relative to 100 parts by weight of the dispersant substrate. In different embodiments the thiadiazole compound is present at greater than 0.1 to 9, or greater than 0.1 to less than 5, or 0.2 to less than 5: to 100 parts by weight of the dispersant substrate. The relative amounts of the thiadiazole compound to the dispersant substrate may also be expressed as (0.1-10):100, or (>0.1-9):100, (such as (>0.5-9):100), or (0.1 to less than 5): 100, or (0.2 to less than 5): 100.

In one embodiment, the dispersant substrate is present at 0.1 to 10 parts by weight relative to 1 part by weight of the thiadiazole compound. In different embodiments the dispersant substrate is present at greater than 0.1 to 9, or greater than 0.1 to less than 5, or about 0.2 to less than 5: to 1 part by weight of the thiadiazole compound. The relative amounts of the dispersant substrate to the thiadiazole compound may also be expressed as (0.1-10):1, or (>0.1-9):1, (such as (>0.5-9): 1), or (0.1 to less than 5): 1, or (0.2 to less than 5): 1.

The thiadiazole-functionalised dispersant may be derived from a substrate that includes a succinimide dispersant (for example, N-substituted long chain alkenyl succinimides, typically a polyisobutylene succinimide), a Mannich dispersant, an ester-containing dispersant, a condensation product of a fatty hydrocarbyl monocarboxylic acylating agent with an amine or ammonia, an alkyl amino phenol dispersant, a hydrocarbyl-amine dispersant, a polyether dispersant, a polyetheramine dispersant, a viscosity modifier containing dispersant functionality (for example polymeric viscosity index modifiers (VMs) containing dispersant functionality), or mixtures thereof. In one embodiment the dispersant substrate includes a succinimide dispersant, an ester-containing dispersant or a Mannich dispersant.

In one embodiment the extreme pressure agent includes a boron- containing compound. The boron-containing compound includes a borate ester (which in some embodiments may also be referred to as a borated epoxide), a borated alcohol, a borated dispersant, a borated phospholipid or mixtures thereof. In one embodiment the boron-containing compound may be a borate ester or a borated alcohol.

The borate ester may be prepared by the reaction of a boron compound and at least one compound selected from epoxy compounds, halohydrin compounds, epihalohydrin compounds, alcohols and mixtures thereof. The alcohols include dihydric alcohols, trihydric alcohols or higher alcohols, with the proviso for one embodiment that hydroxyl groups are on adjacent carbon atoms, i.e., vicinal.

Boron compounds suitable for preparing the borate ester include the various forms selected from the group consisting of boric acid (including metaboric acid, orthoboric acid and tetraboric acid), boric oxide, boron trioxide and alkyl borates. The borate ester may also be prepared from boron halides.

In one embodiment suitable borate ester compounds include tripropyl borate, tributyl borate, tripentyl borate, trihexyl borate, triheptyl borate, trioctyl borate, trinonyl borate and tridecyl borate. In one embodiment the borate ester compounds include tributyl borate, tri-2-ethylhexyl borate or mixtures thereof.

In one embodiment, the boron-containing compound is a borated dispersant, typically derived from an N-substituted long chain alkenyl succinimide. In one embodiment the borated dispersant includes a polyisobutylene succinimide. Borated dispersants are described in more detail in US Patents 3,087,936; and Patent 3,254,025.

In one embodiment the borated dispersant may be used m combination with a sulphur-containing compound or a borate ester.

In one embodiment the extreme pressure agent is other than a borated dispersant.

The number average molecular weight of the hydrocarbon from which the long chain alkenyl group was derived includes ranges of 350 to 5000, or 500 to 3000, or 550 to 1500. The long chain alkenyl group may have a number average molecular weight of 550, or 750, or 950 to 1000.

The N-substituted long chain alkenyl succinimides are borated using a variety of agents including boric acid (for example, metaboric acid, orthoboric acid and tetraboric acid), boric oxide, boron trioxide, and alkyl borates. In one embodiment the borating agent is boric acid which may be used alone or in combination with other borating agents.

The borated dispersant may be prepared by blending the boron compound and the N-substituted long chain alkenyl succinimides and heating them at a suitable temperature, such as, 80 °C to 250 °C, or 90 °C to 230 °C, or 100 °C to 210 °C, until the desired reaction has occurred. The molar ratio of the boron compounds to the N-substituted long chain alkenyl succinimides may have ranges including 10:1 to 1:4, or 4:1 to 1:3; or the molar ratio of the boron compounds to the N-substituted long chain alkenyl succinimides may be 1:2. Alternatively, the ratio of moles B : moles N (that is, atoms of B : atoms of N) in the borated dispersant may be 0.25:1 to 10:1 or 0.33:1 to 4:1 or 0.2:1 to 1.5:1, or 0.25:1 to 1.3:1 or 0.8:1 to 1.2:1 or about 0.5:1 An inert liquid may be used in performing the reaction. The liquid may include toluene, xylene, chlorobenzene, dimethylformamide or mixtures thereof.

In one embodiment, the lubricating composition further includes a borated phospholipid. The borated phospholipid may be derived from boronation of a phospholipid (for example boronation may be carried out with boric acid). Phospholipids and lecithins are described in detail in Encyclopedia of Chemical Technology, Kirk and Othmer, 3rd Edition, in "Fats and Fatty Oils", Volume 9, pages 795-831 and in "Lecithins", Volume 14, pages 250-269.

The phospholipid may be any lipid containing a phosphoric acid, such as lecithin or cephalin, or derivatives thereof. Examples of phospholipids include phosphatidylcholine, phosphatidylserine, phosphatidylinositol, phosphatidylethanolamine, phosphotidic acid and mixtures thereof. The phospholipids may be glycerophospholipids, glycerol derivatives of the above list of phospholipids. Typically, the glycerophospholipids have one or two acyl, alkyl or alkenyl groups on a glycerol residue. The alkyl or alkenyl groups may contain 8 to 30, or 8 to 25, or 12 to 24 carbon atoms. Examples of suitable alkyl or alkenyl groups include octyl, dodecyl, hexadecyl, octadecyl, docosanyl, octenyl, dodecenyl, hexadecenyl and octadecenyl.

Phospholipids may be prepared synthetically or derived from natural sources. Synthetic phospholipids may be prepared by methods known to those in the art. Naturally derived phospholipids are often extracted by procedures known to those in the art. Phospholipids may be derived from animal or vegetable sources. A useful phospholipid is derived from sunflower seeds. The phospholipid typically contains 35 % to 60 % phosphatidylcholine, 20 % to 35 % phosphatidylinositol, 1 % to 25 % phosphatidic acid, and 10 % to 25 % phosphatidylethanolamine, wherein the percentages are by weight based on the total phospholipids. The fatty acid content may be 20 % by weight to 30 % by weight palmitic acid, 2 % by weight to 10 % by weight stearic acid, 15 % by weight to 25 % by weight oleic acid, and 40 % by weight to 55 % by weight linoleic acid.

Friction modifiers may include fatty amines, esters such as borated glycerol esters, fatty phosphites, fatty acid amides, fatty epoxides, borated fatty epoxides, alkoxylated fatty amines, borated alkoxylated fatty amines, metal salts of fatty acids, or fatty imidazolines, condensation products of carboxylic acids and polyalkylene-polyamines.

In one embodiment the lubricating composition may contain phosphorus- or sulphur- containing antiwear agents other than compounds described as an extreme pressure agent of the amine salt of a phosphoric acid ester described above. Examples of the antiwear agent may include a non-ionic phosphorus compound (typically compounds having phosphorus atoms with an oxidation state of +3 or +5), a metal dialkyldithiophosphate (typically zinc dialkyldithiophosphates), a metal mono- or di- alkylphosphate (typically zinc phosphates), or mixtures thereof.

The non-ionic phosphorus compound includes a phosphite ester, a phosphate ester, or mixtures thereof.

In one embodiment the lubricating composition of the invention further includes a dispersant. The dispersant may be a succinimide dispersant (for example N-substituted long chain alkenyl succinimides), a Mannich dispersant, an ester-containing dispersant, a condensation product of a fatty hydrocarbyl monocarboxylic acylating agent with an amine or ammonia, an alkyl amino phenol dispersant, a hydrocarbyl-amine dispersant, a polyether dispersant or a polyetheramine dispersant.

In one embodiment the succinimide dispersant includes a polyisobutylene-substituted succinimide, wherein the polyisobutylene from which the dispersant is derived may have a number average molecular weight of 400 to 5000, or 950 to 1600.

Succinimide dispersants and their methods of preparation are more fully described in U.S. Patents 4,234,435 and 3,172,892.

Suitable ester-containing dispersants are typically high molecular weight esters. These materials are described in more detail in U.S. Patent 3,381,022.

In one embodiment the dispersant includes a borated dispersant. Typically the borated dispersant includes a succinimide dispersant including a polyisobutylene succinimide, wherein the polyisobutylene from which the dispersant is derived may have a number average molecular weight of 400 to 5000. Borated dispersants are described in more detail above within the extreme pressure agent description.

Dispersant viscosity modifiers (often referred to as DVMs) include functionalised polyolefins, for example, ethylene-propylene copolymers that have been functionalized with the reaction product of maleic anhydride and an amine, a polymethacrylate functionalised with an amine, or esterified styrene- maleic anhydride copolymers reacted with an amine may also be used in the composition of the invention.

Corrosion inhibitors include 1-amino-2-propanol, octylamine octanoate, condensation products of dodecenyl succinic acid or anhydride and/or a fatty acid such as oleic acid with a polyamine.

Metal deactivators include derivatives of benzotriazoles (typically tolyltriazole), 1,2,4-triazoles, benzimidazoles, 2-alkyldithiobenzimidazoles or 2-alkyldithiobenzothiazoles. The metal deactivators may also be described as corrosion inhibitors.

Foam inhibitors include copolymers of ethyl acrylate and 2-ethylhexyl acrylate and optionally vinyl acetate.

Demulsifiers include trialkyl phosphates, and various polymers and copolymers of ethylene glycol, ethylene oxide, propylene oxide, or mixtures thereof.

Pour point depressants including esters of maleic anhydride-styrene, polymethacrylates, polyacrylates or polyacrylamides.

Seal swell agents including Exxon Necton-37™ (FN 1380) and Exxon Mineral Seal Oil™ (FN 3200).

Preferably the lubricating oil composition contains co-solvents selected from the group consisting of di-isodecyl adipate, di-propyladipate, di-isotridecyl adipate, trimethylpropyl tricaprylate, diisooctyl adipate, di-ethylhexyl adipate and di-nonyl adipate. Preferably the lubricating oil composition contains co-solvents in an amount of ≥ 0.5 % to ≤ 35 % by weight, more preferably ≥ 1 % to ≤ 30 % by weight, related to the overall weight of the lubricating oil composition.

In another embodiment, the presently claimed invention is directed to a method of reducing friction in an engine using engine oil comprising at least one alkoxylated polytetrahydrofurane as defined above or a mixture of polytetrahydrofuranes as defined above in combination with an antioxidant as defined above.

In another embodiment, the presently claimed invention is directed to a method of enhancing the friction modification properties of a lubricating oil composition in the lubrication of a mechanical device comprising formulating said lubricating oil composition with at least one alkoxylated polytetrahydrofurane in combination with an antioxidant as defined above.

Enhancing the friction-modification properties means in the sense of the presently claimed invention that the friction coefficient of the lubricating oil composition comprising alkoxylated polytetrahydrofurane and antioxidant as defined above is lower that the friction coefficient of a lubricating oil composition that contains said alkoxylated polytetrahydrofurane but without the antioxidant according to the presently claimed invention, meaning either that no antioxidant at all is present in the said comparative lubricant composition or that a different (non-inventive) antioxidant is present.

The friction-modification properties are determined by measuring the friction coefficient at 25% slide roll ratio (SRR) using mini-traction machine (MTM) measurements at 70 °C and 1 GPa.

A mechanical device in the sense of the presently claimed invention is a mechanism consisting of a device that works on mechanical principles.

The mechanical device is preferably selected from the group consisting of bearings, gears, joints and guidances. Preferably the mechanical device is operated at temperatures in the range of ≥ 10 °C to ≤ 80 °C.

### Examples

OHZ = hydroxyl number, determined according to DIN 53240
Mn= number average molecular weight, determined according to DIN 55672-1 and referred to Polystyrene calibration standard.
Mw= weight average molecular weight, determined according to DIN 55672-1 and referred to Polystyrene calibration standard.
PD = polydispersity, determined according to DIN 55672-1

### Synthesis of polytetrahydrofuranes according to the presently claimed invention:

### Example 1:

### PolyTHF 650 with 20 equivalents of C12 epoxide

A steel reactor (1,5 l) was loaded with polytetrahydrofurane (MW 650) (0,2 mol, 130 g), and 3,4 g KOtBu was mixed and the reactor was purged with nitrogen. The reactor was heated under vacuum (10 mbar) and heated to 140 °C for 0.25 h. Then again nitrogen was loaded. At a pressure of 2 bar 50 g C12 epoxide was brought in dropwise at 140 °C. 686 g C12 epoxide of total (736 g; 4,0 mol) was added during 10 h at 140 °C and under pressure of 6 bar. Yield: 874 g, quantitative (Theor.: 866 g) OHZ: 28,2 mg KOH/g.

### Example 2:

### PolyTHF 650 with 12 equivalents of C12 epoxide and 20 equivalents of butylene oxide (block)

A steel reactor (1,5 l) was loaded with polytetrahydrofurane (MW 250) (0,2 mol, 130 g), and 3,4 g KOtBu was mixed and the reactor was purged with nitrogen. The reactor was heated under vacuum (10 mbar) and heated to 140 °C for 0.25 h. Then again nitrogen was loaded. At a pressure of 2 bar 50 g C12 epoxide was brought in dropwise at 140 °C. 390 g C12 epoxide of total (441 g; 2,4 mol) was added during 5 h at 140 °C and under pressure of 6 bar. Then butylene oxide (288 g, 4,0 mol) was added within 4 h at 140 °C. The reactor was stirred for 10 h at 140 °C and cooled to 80 °C. The product was stripped by nitrogen. Then the product was discharged and mixed with Ambosol® (magnesium silicate, 30 g) and mixed on a rotary evaporator at 80 °C. The purified product was obtained by filtration in a pressure strainer (Filtrations media: Seitz 900). Yield: 866 g, quantitative (Theor.: 859 g) OHZ: 30,1 mg KOH/g

Example 3:

### PolyTHF 650 with 12 equivalents of C12 epoxide and 20 butylene oxide (random)

A steel reactor (5 l) was loaded with polytetrahydrofurane (MW 250) (0,732 mol, 476 g), and KOtBu (12,6 g) was mixed and the reactor was purged with nitrogen. At a pressure of 2 bar a mixture of butylene oxide and C12 epoxide (14,64 mol, 1104 g butylene oxide; 8,8 mol, 1617 g C12 epoxide) was brought in dropwise during 30 h at 140 °C and under pressure of 6 bar. The reactor was stirred for 10 h at 140 °C and cooled to 80 °C. The reactor was cooled to 80 °C and the product was stripped by nitrogen. Then the product was discharged and mixed with Ambosol® (magnesium silicate, 60 g) and mixed on a rotary evaporator at 80 °C. The purified product was obtained by filtration in a pressure strainer (Filtrations media: Seitz 900). Yield: 3077 g (96%) (Th.: 3200 g), OHZ: 31,4 mg KOH/g

### Example 4:

### PolyTHF 650 with 12 equivalents of C12 epoxide and 20 equivalents of propylene oxide (random)

A steel reactor (1,5 l) was loaded with polytetrahydrofurane (MW 650) (0,2 mol, 130 g), and KOtBu (3,21 g) was mixed and the reactor was purged with nitrogen. At a pressure of 2 bar a mixture of propylene oxide and C12 epoxide (4,0 mol, 232 g PO; 2,4 mol, 441 g C12 epoxide) was brought in dropwise during 7 h at 140 °C and under pressure of 6 bar. The reactor was stirred for 10 h at 140 °C and cooled to 80 °C. The reactor was cooled to 80 °C and the product was stripped by nitrogen. Then the product was discharged and mixed with Ambosol® (magnesium silicate, 60 g) and mixed on a rotary evaporator at 80 °C. The purified product was obtained by filtration in a pressure strainer (Filtrations media: Seitz 900). Yield: 800 g (quantitativ) (Th.: 803 g) , OHZ: 30,8 mgKOH/g.

### Example 5:

### PolyTHF 1000 with 18 equivalents of C12 epoxide and 30 equivalents of butylene oxide (random)

A steel reactor (1,5 l) was loaded with polytetrahydrofurane (MW 1000) (0,1 mol, 100 g), and KOtBu (2,59 g) was mixed and the reactor was purged with nitrogen. At a pressure of 2 bar a mixture of butylene oxide and C12 epoxide (3,0 mol, 216 g butylene oxide; 1,8 mol, 331 g C12 epoxide) was brought in dropwise during 5 h at 140 °C and under pressure of 6 bar. The reactor was stirred for 10 h at 140 °C and cooled to 80 °C. The reactor was cooled to 80 °C and the product was stripped by nitrogen. Then the product was discharged and mixed with Ambosol® (magnesium silicate, 60 g) and mixed on a rotary evaporator at 80 °C. The purified product was obtained by filtration in a pressure strainer (Filtrations media: Seitz 900). Yield: 661 g (quantitativ) (Th.: 647 g), OHZ: 24,7 mg KOH/g

### Example 6:

### PolyTHF 1000 with 36 equivalents of C12 epoxide and 60 equivalents of butylene oxide (random)

A steel reactor (1.5 l) was loaded with polytetrahydrofurane (MW 1000) (0.1 mol, 100 g), and KOtBu (4.78 g) was mixed and the reactor was purged with nitrogen. At a pressure of 2 bar a mixture of butylene oxide and C12 epoxide (6.0 mol, 432 g butylene oxide; 3.6 mol, 662 g C12 epoxide) was brought in dropwise during 11 h at 140 °C and under pressure of 6 bar. The reactor was stirred for 10 h at 140 °C and cooled to 80 °C. The reactor was cooled to 80 °C and the product was stripped by nitrogen. Then the product was discharged and mixed with Ambosol® (magnesium silicate, 60 g) and mixed on a rotary evaporator at 80 °C. The purified product was obtained by filtration in a pressure strainer (Filtrations media: Seitz 900). Yield: 1236 g (quantitative) (Th.: 1194 g), OHZ: 9.4 mg KOH/g. GPC: Mn: 5204; Mw: 6629; PD: 1.27.

Physical characterization of Example 6: Viscosity at 40 °C [mPas]: 676; Viscosity at 100 °C [mPas]: 84.

**Table 1**

| | Starting alcohol | Random / Block | PO | BuO | C12 epoxide | OHZ [mg KOH/g] | Mn | Mw | PD |
|---|---|---|---|---|---|---|---|---|---|
| Ex. 1 | pTHF 650 | block | | | 20 | 28,2 | 4517 | 4923 | 1.09 |
| | pTHF 650 | block: | | 20 | 12 | 30,1 | 3861 | 4602 | 1.19 |
| | | 1. C12 epoxide; | | | | | | | |
| Ex. 2 | | 2. BuO | | | | | | | |
| Ex. 3 | pTHF 650 | random | | 20 | 12 | 31,4 | 4720 | 4650 | 1.42 |
| Ex. 4 | pTHF 650 | random | 20 | | 12 | 30,8 | 4660 | 5074 | 1.09 |
| Ex. 5 | pTHF10 00 | random | | 30 | 18 | 24,7 | 4551 | 5667 | 1.24 |
| Ex. 6 | pTHF10 00 | random | | 60 | 36 | 9,4 | 5204 | 6629 | 1.27 |

The following antioxidant compounds (stabilizers) were tested in the stabilization tests:
benzothiazole (an aromatic amine stabilizer);
phenothiazine;
hydroquinone monomethylether (MEHQ);
phenoxazine;
2-methyl-hydroquinone (2-MDHQ);
2,2,6,6-tetramethylpiperidin-4-yl dodecanoate (a hindered amine stabilizer);
2-tert.-butylhydroxyanisole (a hydroquinone-type stabilizer)

### Test equipment:

Dispersing Aggregate: PT-DA 30/4EC-B250; Polytron® PT 6100 (from Kinematica Inc.), glass beaker (diameter: 6 cm; height: 10 cm); Viscosimeter: Anton Paar SVM 3000.

### Test method for determining loss of viscosity

The stabilizer compound was dissolved in the compound of Example 6 to obtain 100.0 g of a 0.1w% solution. The shear head (dispersing aggregate: PT-DA 30/4EC-B250) of the mixing engine (Polytron® PT 6100) was adjusted to enable mixing of the individual components. The end of the stirrer was 5.0 mm above the glass bottom. For temperature management the beaker glass was brought in a water bath at a temperature of 100 °C. Alternatively, one could use a cryostat to control the oil temperature at 100 °C.

### Analytic method:

To monitor the stability of the compound of Example 6 against degradation, test amounts were periodically taken for measurement (e.g. 3 ml after stirring period of 3 h) from the compound in the presence/absence of stabilizer as indicated by the Table below. To make sure that the viscosity measurement was accurate, the oil was degassed by keeping it for 4 h without shaking before measurement. The dynamic viscosity of the oil was obtained at 100 °C.

**Table 2.**

| Test | Stabilizer [AO] | stabilizer [w%] | time until 5% loss of initial viscosity* [h] | time until 10% loss of initial viscosity* [h] |
|---|---|---|---|---|
| 1 | -- | 0,0 | 2 | 3 |
| 2 | benzothiazole | 0,1 | 6 | 9 |
| 3 | phenothiazine | 0,1 | 20 | 20 |
| 4 | hydroquinone monomethylether | 0,1 | 24 | 27 |
| 5 | phenoxazine | 0,1 | 30 | 30 |
| 6 | 2-methyl-hydroquinone | 0,1 | 30 | 33 |
| 7 | hindered amine | 0,1 | 30 | 46 |
| 8 | 2-tert.-butylhydroxyanisole | 0,1 | 54 | 55 |
| 9 | MEHQ : phenothiazine (1:1) | 0,1 | 18 | 22 |
| 10 | MEHQ : phenoxazine (1:1) | 0,1 | 72 | 72 |

The stabilization tests revealed that antioxidants from the following known classes of antioxidants provide very good stabilization for alkoxylated polytetrahydrofuranes against degradation: phenothiazines, phenoxazines, hindered amines and hydroquinone-type stabilizers as well as mixtures thereof.

## Claims

1. Composition comprising
(a) alkoxylated polytetrahydrofurane of general formula (II) 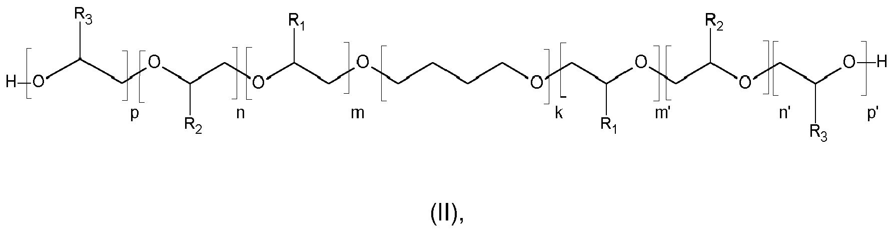 wherein
m is an integer in the range of ≥ 1 to ≤ 50,
m' is an integer in the range of ≥ 1 to ≤ 50,
(m+m') is an integer in the range of ≥ 1 to ≤ 90,
n is an integer in the range of ≥ 0 to ≤ 75,
n' is an integer in the range of ≥ 0 to ≤ 75,
p is an integer in the range of ≥ 0 to ≤ 75,
p' is an integer in the range of ≥ 0 to ≤ 75,
k is an integer in the range of ≥ 2 to ≤ 30,
R¹ denotes an unsubstituted, linear or branched, alkyl radical having 6, 7, 8, 9, 10, 11, 12, 13, 14, 15, 16, 17, 18, 19, 20, 21, 22, 23, 24, 25, 26, 27 or 28 carbon atoms,
R² denotes -CH₂-CH₃, and
R³ identical or different, denotes a hydrogen atom or -CH₃,
whereby the concentrations denoted by k are distributed to form a block polymeric structure and the concentrations denoted by p, p', n, n', m and m' are distributed to form a block polymeric structure or a random polymeric structure,
and
(b) an antioxidant selected from the group consisting of
unsubstituted phenoxazine or phenoxazine which is substituted with 1, 2 or 3 substituents selected from the group consisting of -C₁₋₁₀-alkyl and -O-C₁₋₁₀-alkyl; unsubstituted phenothiazine or phenothiazine which is substituted with 1, 2 or 3 substituents selected from the group consisting of -C₁₋₁₀-alkyl and -O-C₁₋₁₀-alkyl; hydroquinone-type stabilizers of general formula (III), 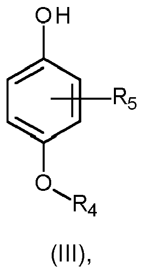 wherein
R⁴ denotes hydrogen or an unsubstituted or substituted, linear or branched, alkyl radical having 1, 2, 3, 4, 5, 6, 7 or 8 carbon atoms,
R⁵ denotes hydrogen or an unsubstituted or substituted, linear or branched, alkyl radical having 1, 2, 3, 4, 5, 6, 7 or 8 carbon atoms;
hindered amines, and combinations thereof.

2. Composition according to claim 1, wherein k is an integer in the range of ≥ 3 to ≤ 25.

3. Composition according to claim 1 or 2, wherein the alkoxylated polytetrahydrofurane has a weight average molecular weight Mw in the range of 500 to 20000 g/mol determined according to DIN 55672-1 (polystyrene calibration standard).

4. Composition according to one more of claims 1 to 3, wherein (m+m') is in the range of ≥ 3 to ≤ 65.

5. Composition according to one more of claims 1 to 4, wherein the ratio of (m+m') to k is in the range of 0.3:1 to 6:1.

6. Composition according to one more of claims 1 to 5, wherein m is an integer in the range of ≥ 1 to ≤ 25 and m' is an integer in the range of ≥ 1 to ≤ 25.

7. Composition according to one more of claims 1 to 6, wherein R¹ denotes an unsubstituted, linear alkyl radical having 6, 7, 8, 9, 10, 11, 12, 13, 14, 15, 16, 17 or 18 carbon atoms.

8. Composition according to claim 1, wherein R³ denotes -CH₃.

9. Composition according to claim 1, wherein
m is an integer in the range of ≥ 1 to ≤ 30,
m' is an integer in the range of ≥ 1 to ≤ 30,
(m+m') is an integer in the range of ≥ 3 to ≤ 50,
n is an integer in the range of ≥ 3 to ≤ 45,
n' is an integer in the range of ≥ 3 to ≤ 45,
(n+n') is an integer in the range of ≥ 6 to ≤ 90,
p is an integer in the range of ≥ 0 to ≤ 75,
p' is an integer in the range of ≥ 0 to ≤ 75,
k is an integer in the range of ≥ 3 to ≤ 25,
R¹ denotes an unsubstituted, linear alkyl radical having 6, 7, 8, 9, 10, 11, 12, 13, 14, 15, 16, 17 or 18 carbon atoms,
R² denotes -CH₂-CH₃, and
R³ denotes -CH₃.

10. Composition according to claim 9, wherein the ratio of (m+m') to k is in the range of 0.3:1 to 6:1 and the ratio of (n+n') to k is in the range of 1.5:1 to 10:1.

11. Composition according to claim 1, wherein
m is an integer in the range of ≥ 1 to ≤ 30,
m' is an integer in the range of ≥ 1 to ≤ 30,
(m+m') is an integer in the range of ≥ 3 to ≤ 50,
n is an integer in the range of ≥ 0 to ≤ 45,
n' is an integer in the range of ≥ 0 to ≤ 45,
p is an integer in the range of ≥ 3 to ≤ 45,
p' is an integer in the range of ≥ 3 to ≤ 45,
(p+p') is an integer in the range of ≥ 6 to ≤ 90,
k is an integer in the range of ≥ 3 to ≤ 25,
R¹ denotes an unsubstituted, linear alkyl radical having 6, 7, 8, 9, 10, 11, 12, 13, 14, 15, 16, 17 or 18 carbon atoms,
R² denotes -CH₂-CH₃, and
R³ denotes -CH₃.

12. Composition according to claim 11, wherein the ratio of (m+m') to k is in the range of 0.3:1 to 6:1 and the ratio of (p+p') to k is in the range of 1.5:1 to 10:1.

13. Composition according to one of the preceding claims further comprising base stock, co-solvent and/or additives.

14. Composition according to one of the preceding claims, wherein the antioxidant is selected from the group consisting of the group consisting of unsubstituted phenoxazine or phenoxazine which is substituted with 1, 2 or 3 substituents selected from the group consisting of methyl, ethyl and propyl; unsubstituted phenothiazine or phenothiazine which is substituted with 1, 2 or 3 substituents selected from the group consisting of methyl, ethyl and propyl; hydroquinone-type stabilizers of general formula (III), 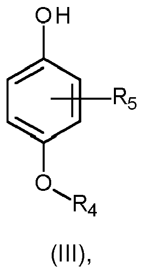 wherein R⁴ denotes hydrogen or an unsubstituted, linear or branched, alkyl radical having 1, 2, 3 or 4 carbon atoms, R⁵ denotes hydrogen or an unsubstituted, linear or branched, alkyl radical having 1, 2, 3 or 4 carbon atoms; hindered amines, and combinations thereof.

15. Composition according to one of the preceding claims, wherein the hydroquinone-type stabilizer of general formula (III) is selected from the group consisting of hydroquinone monomethylether, 2-methyl-hydroquinone, 2- and/or 3-tert-butyl-4-hydroxyanisole and combinations thereof and the hindered amine is 2,2,6,6-tetramethylpiperidin-4-yl dodecanoate.

16. Composition according to one of the preceding claims, wherein the antioxidant is a combination of 4-methoxyphenol and unsubstituted phenoxazine.
